# EUROPÄISCHE PATENTSCHRIFT

(11) **EP 2 397 425 B1**
(45) Veröffentlichungstag und Bekanntmachung des Hinweises auf die Patenterteilung: **29.05.2013**
(21) Anmeldenummer: 11159047.7
(22) Anmeldetag: 21.03.2011
(51) Int. Cl.: B65G 47/18, B65G 67/24

(54) **Mobile Überladestation zum Überladen von Schüttgut**
Mobile transfer station for transferring bulk material
Station de transbordement mobile pour le transbordement de matières en vrac

(30) Priorität: 18.06.2010 DE 202010005670 U
(43) Veröffentlichungstag der Anmeldung: 21.12.2011
(73) Patentinhaber: Fliegl, Josef, 84513 Töging (DE)
(72) Erfinder: Fliegl, Josef, 84513 Töging (DE)
(74) Vertreter: Tetzner, Michael

(56) Entgegenhaltungen:
- DE-U1-202005 017 280
- DE-U1-202009 000 751
- DE-U1-202010 001 105
- US-A- 4 963 066
- US-A1- 2005 123 385

## Beschreibung

Die Erfindung betrifft eine mobile Überladestation zum Überladen von Schüttgut.

Aus der DE 202 01 638 U1 ist ein Überladewagen für körniges Erntegut bekannt, der als Anhänger ausgebildet ist und im Arbeitseinsatz von einem Zugfahrzeug, beispielsweise einen Traktor gezogen wird. Am Ladeboden ist eine als umlaufender Kettenkratzförderer ausgebildete Längsfördervorrichtung vorgesehen, die das Erntegut zur hinteren Stirnwand transportiert, wo eine sich quer zur Fahrtrichtung erstreckende Querfördervorrichtung angeordnet ist, die in einer seitlich am Ladebehälter angeordneten Überladevorrichtung mündet.

Dieser bekannte Überladewagen ist trotz seiner quaderförmigen Ausbildung des Ladebehälters in seinem Füllvolumen relativ begrenzt. Zum Befüllen des Überladewagens muss das Erntefahrzeug ebenfalls mit einer Überladevorrichtung ausgestattet sein, wobei der Überladewagen während des Erntevorganges neben dem Erntefahrzeug herfährt und dabei befüllt wird. Bei vielen Anwendungen sind jedoch die Erntefahrzeuge nicht mit einer Überladevorrichtung, sondern lediglich einer Kippvorrichtung ausgebildet.

Die aus der DE-U 20 2009 000 751 bekannte mobile Überladestation zum Überladen von Schüttgut besteht im Wesentlichen aus einem Aufnahmebehälter für Schüttgut, der eine Schubbodeneinheit aufweist, einer am Ende der Schubbodeneinheit angeordneten Querfördereinrichtung und einer, sich an die Querfördereinrichtung anschließenden Hochfördereinrichtung, die das Schüttgut nach oben fördert. Weiterhin ist ein Fahrgestell sowie eine Hebe- und Absenkeinrichtung vorgesehen, um den Aufnahmebehälter zwischen einer angehobenen Transportstellung und einer abgesenkten Arbeitstellung zu verstellen. Diese Überladestation zeichnet sich durch ein großes Ladevolumen aus und lässt sich auf einfache Art und Weise befüllen.

Zur weiteren Vergrößerung des Ladevolumens wird in der DE-U-20 2010 001 105.1 vorgeschlagen, die Seitenwände klappbar auszubilden, sodass sie zwischen einer aufgeklappten ersten Arbeitsstellung und einer hochgeklappten zweiten Arbeitsstellung verstellbar sind. Wenigstens eine der beiden Seitenwände kann außerdem eine dritte Arbeitstellung einnehmen, in der sie zwischen der ersten und zweiten Arbeitsstellung angeordnet ist und eine Gleitfläche für das Schüttgut in Richtung der Bodenfördereinrichtung bildet.

Zum Befüllen der Überladestation werden die beiden Seitenwände aufgeklappt, wodurch sich das Ladevolumen weiter vergrößern lässt. Beim Überladen wird das Schüttgut mit Hilfe der Bodenfördereinrichtung zur Hochfördereinrichtung transportiert und dann über diese nach oben gefördert. Damit immer genügend Schüttgut im Bereich der Bodenfördereinrichtung vorhanden ist, werden die Seitenwände nach und nach weiter hochgeklappt, sodass die Seitenflächen eine Gleitfläche für das Schüttgut in Richtung der Bodenfördereinrichtung bilden. Auf diese Weise kann auch mit einer relativ schmal ausgebildeten Bodenfördereinrichtung eine vollständige Entleerung erreicht werden. Mit hochgeklappten Seitenwänden ist die Überladestation durch die schmale Bauweise problemlos im Straßenverkehr bewegbar.

Bei der Materialanlieferung, beispielsweise mittels eines LKWs, wird das gesamte Material auf einmal auf der aufgeklappten Überladestation entladen. Je nach Material kann dabei die anfänglich sehr große Masse zu Stauproblemen im Übergangsbereich zwischen Bodenfördereinrichtung und Hochfördereinrichtung führen.

Eine weitere mobile Schüttgut-Verladevorrichtung mit klappbaren Seitenwänden ist ferner der DE 10 2008 050 146 A1 zu entnehmen. Aus der DE 20 16 431 ist ferner ein Transportwagen für landwirtschaftliche Schüttgüter bekannt, der oberhalb eines Förderbodens zwei gegensinnig angetriebene Rührwellen mit Auflockerungswerkzeugen aufweist.

Der Erfindung liegt daher die Aufgabe zugrunde, die Förderwirkung der mobilen Überladestation zu verbessern.

Erfindungsgemäß wird diese Aufgabe durch die Merkmale des Anspruches 1 gelöst.

Die erfindungsgemäße Überladestation zum Überladen von Schüttgut besteht im Wesentlichen aus
a. einem Aufnahmebehälter für Schüttgut, der einen Boden, zwei Seitenwände und eine Stirnwand aufweist, wobei der Boden mit einer Bodenfördereinrichtung ausgestattet ist, und die Seitenwände klappbar ausgebildet und zwischen wenigstens einer aufgeklappten ersten Arbeitstellung und einer hochgeklappten zweiten Arbeitstellung verstellbar sind,
b. einer im Bereich der Stirnwand angeordneten Hochfördereinrichtung, die sich an die Bodenfördereinrichtung anschließt und das Schüttgut nach oben fördert und
c. einem Fahrgestell.

Weiterhin ist wenigstens ein oberhalb der Bodenfördereinrichtung angeordneter Rotor zur Dosierung des Schüttgutes vorgesehen, der eine in Transportrichtung der Bodenfördereinrichtung ausgerichtete Drehachse aufweist. Außerdem ist wenigstens Bodenelement vorgesehen, das quer zur Transportrichtung der Bodenfördereinrichtung derart verschiebbar ist, dass es von einer Ruhestellung in wenigstens eine Abdeckstellung gebracht werden kann, in der es die Bodenfördereinrichtung teilweise abdeckt.

Mit Hilfe des Rotors in Kombination mit den wenigstens einen Bodenelement kann der anfängliche Druck des Materials auf die Bodenfördereinrichtung, insbesondere im Übergangsbereich zur Hochfördereinrichtung, entscheidend minimiert werden, sodass ein dosiertes Hochfördern des Materials problemlos erreicht werden kann.

Weitere Ausgestaltungen der Erfindung sind Gegenstand der Unteransprüche.

Gemäß einer Ausgestaltung der Erfindung ist wenigstens ein Rotor mit seiner Drehachse in der Längsmittelebene des Aufnahmebehälters angeordnet. Er erstreckt sich dabei vorzugsweise über die gesamte Länge der Bodenfördereinrichtung. Es können aber auch zwei oder drei Rotoren vorgesehen werden. Bei der Ausbildung mit zwei Rotoren sind diese in Transportrichtung zweckmäßig rechts und links von der Längsmittelebene angeordnet. Weiterhin ist es vorteilhaft, wenn die Rotoren parallel nebeneinander über die Bodenfördereinrichtung angeordnet werden.

Der Antrieb des Rotors weist einen Antriebsmotor (beispielsweise einen Hydromotor) auf, der vorzugsweise in beide Drehrichtungen drehen kann.

Gemäß einer bevorzugten Ausgestaltung der Erfindung weist der bzw. die Rotoren wenigstens eins, zwei oder drei radial von der Drehachse abstehende und sich über die gesamte Länge der Bodenfördereinrichtung erstreckende Förderelemente auf.

Mit Hilfe einer geeigneten Ansteuerung der Rotoren lässt sich dass über die Hochfördereinrichtung noch oben geförderte Material zuverlässig dosieren.

Gemäß einer weiteren Ausgestaltung der Erfindung sind an beiden Seiten der Bodenfördereinrichtung jeweils ein verschiebbares Bodenelement vorgesehen.

Die Bodenelemente stellen somit ein weiteres Mittel dar, um einen Stau im Übergangsbereich zwischen Bodenfördereinrichtung und Hochfördereinrichtung zu vermeiden und das Material in der gewünschten Menge zu dosieren. Die Bodenelemente sind in geeigneter Weise am Rahmen des Aufnahmebehälters verschiebbar geführt und werden mittels doppeltwirkenden Hydraulikzylindern angetrieben.

Weitere Ausgestaltungen der Erfindung werden anhand der nachfolgenden Beschreibung und der Zeichnung näher erläutert.

In der Zeichnung zeigen
- Fig. 1: eine dreidimensionale Darstellung der mobilen Überladestation gemäß einem ersten Ausführungsbeispiel (in einer aufgeklappten Arbeitsstellung der Seitenwände),
- Fig. 2: eine dreidimensionale Darstellung der mobilen Überladestation gemäß einem zweiten Ausführungsbeispiel (in einer aufgeklappten Arbeitsstellung der Seitenwände),
- Fig. 3: eine dreidimensionale Darstellung der Überladestation gemäß Fig. 2 mit einer hochgeklappten Seitenwand,
- Fig. 4: eine Detaildarstellung des Rotors und seines Antriebsmotors,
- Fig. 5: eine vereinfachte Draufsicht der Überladestation, wobei die Rotoren nicht dargestellt sind.

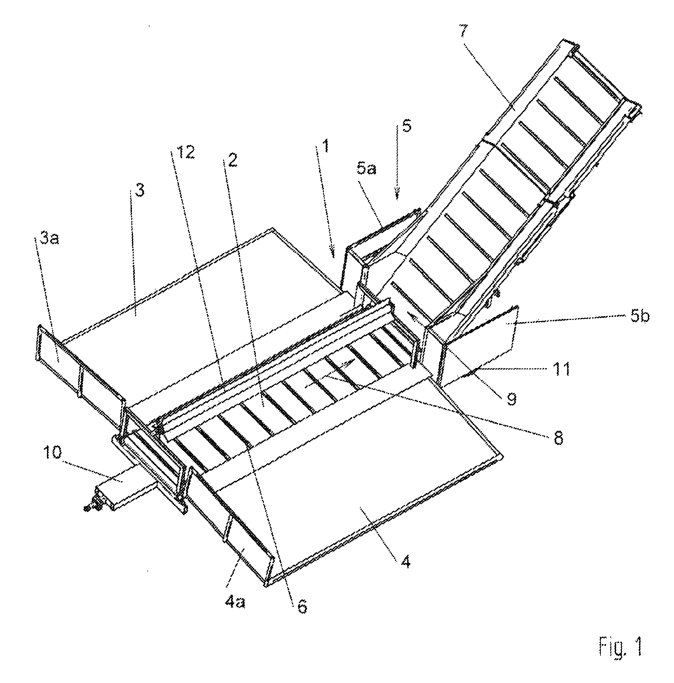

In Fig. 1 ist die mobile Überladestation zum Überladen von Schüttgut, insbesondere von landwirtschaftlichem Schüttgut, in einer aufgeklappten Arbeitsstellung gezeigt. Sie weist einen Aufnahmebehälter 1 für das Schüttgut auf, der einen Boden 2, zwei Seitenwände 3, 4 und eine Stirnwand 5 vorsieht. Der Boden 2 ist ferner mit einer Bodenfördereinrichtung 6 ausgestattet.

Im Bereich der Stirnwand 5 ist eine Hochfördereinrichtung 7 angeordnet, die sich der Bodenfördereinrichtung 6 anschließt und das Schüttgut nach oben fördert. Sie steht über eine Öffnung 9 in der Stirnwand 5 mit der Bodenfördereinrichtung in Verbindung.

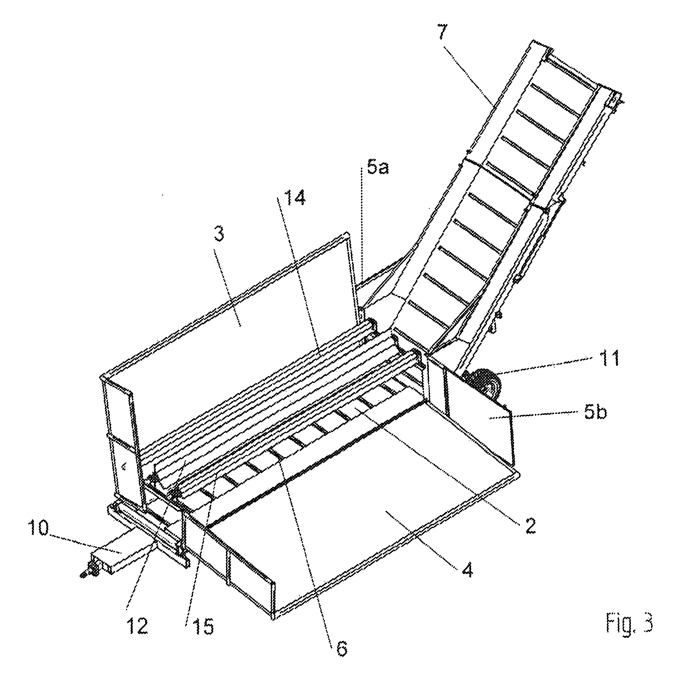

Die Stirnwand 5 wird im dargestellten Ausführungsbeispiels durch zwei schwenkbare Wandelemente 5a, 5b gebildet, die zwischen der in Fig. 1 gezeigten Stellung parallel zur Transportrichtung 8 der Bodenfördereinrichtung 6 in die in Fig. 3 gezeigte Stellung verschenkt werden können, in der sie sich im Wesentlichen senkrecht zur Transportrichtung 8 erstreckten.

Die Überladestation weist weiterhin ein Fahrgestell und eine Hebe- und Absenkeinrichtung vor, um den Aufnahmebehälter 1 zwischen einer angehobenen Transportstellung und einer abgesenkten Arbeitsstellung zu verstellen, wie das insbesondere in der DE-U 20 2010 001 105 näher dargestellt ist.

Am vorderen Ende der Überladestation ist eine Deichsel 10 angebracht, mit der sie zum Transport an ein Zugfahrzeug angehängt werden kann. In der Arbeitstellung liegt der Aufnahmebehälter 1 vollständig auf dem Boden auf. Das Fahrgestell 11 ist hierzu gelenkig am Aufnahmebehälter angebracht und kann mit Hilfe eines nicht näher dargestellten Aktuators zur Absenkung des Aufnahmebehälters verstellt werden.

Die Hochfördereinrichtung 7 ist ebenfalls um eine Schwenkachse schwenkbar am Aufnahmebehälter gelagert und kann mit Hilfe einer geeigneten Hebe- und Absenkeinrichtung 11 in ihrer Höhe angepasst werden. Die Hochfördereinrichtung kann in jeder beliebigen Art und Weise ausgestaltet sein. Als besonders zweckmäßig haben sich die Ausbildung als Rohrschnecke, Trogschnecke, Förderband oder Kratzboden herausgebildet. Auch für die Bodenfördereinrichtung 6 kommen unterschiedliche Varianten, wie Kratzboden, Förderband, Pushing Floor oder Schubboden, in Betracht.

Die Breite der Hochfördereinrichtung 7 entspricht im dargestellten Ausführungsbeispiel der Breite der Bodenfördereinrichtung 6, wodurch es zu keiner Verengung im Übergangsbereich kommt und ein zuverlässiger Transport gewährleistet werden kann.

Die Seitenwände 3, 4 sind um Klappachsen schwenkbar, die zu beiden Seiten der Bodenfördereinrichtung 6 angeordnet und parallel zur Transportrichtung 8 der Bodenfördereinrichtung 6 ausgerichtet sind. Die Seitenwände sind plattenartig ausgebildet und weisen an ihren der Hochfördereinrichtung 7 abgewandten Enden Wandelemente 3a, 4a auf, die in der aufgeklappten Stellung gemäß Fig. 1 etwa vertikal nach oben ausgerichtet sind. Für weitere Ausgestaltungen und Details der bis jetzt beschriebenen mobilen Überladestation wird hiermit auch auf die DE-U-20 2010 001 105 verwiesen.

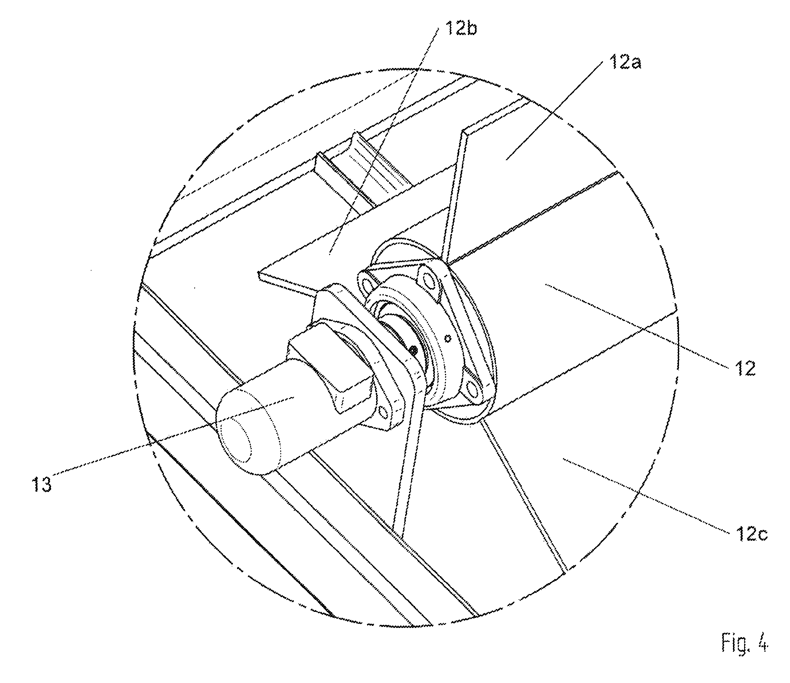

Die in Fig. 1 dargestellte Überladestation sieht weiterhin einen in der Längsmittelebene über der Bodenfördereinrichtung 6 angeordneten Rotor 12 vor, dessen Drehachse in Transportrichtung 8 ausgerichtet. Der Rotor erstreckt sich über die gesamte Länge der Bodenfördereinrichtung 6 und ist dort an geeigneten Rahmen des Aufnahmebehälters 1 drehbar gehaltert. Zum Antrieb des Rotors ist ein beispielsweise als Hydromotor ausgebildeter Antriebsmotor 13 (Fig. 4) vorgesehen, der den Rotor 12 in beide Richtungen antreiben kann. Der Rotor selbst weist im dargestellten Ausführungsbeispiel drei radial flügelartig abstehende Förderelemente 12a, 12b, 12c auf, die sich zweckmäßigerweise über die gesamte Länge der Bodenfördereinrichtung erstrecken.

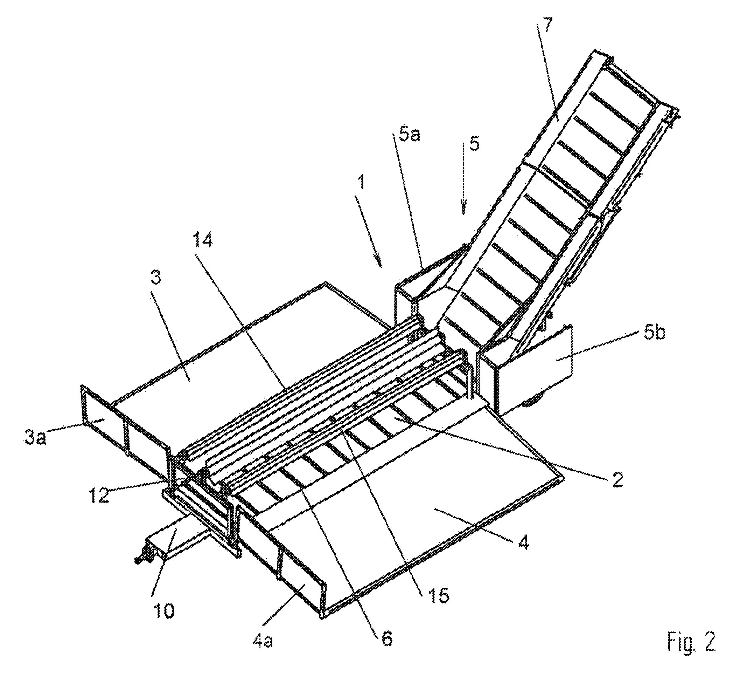

Im Ausführungsbeispiel gemäß Fig. 2 sind neben dem mittig angeordneten Rotor 2 rechts und links zwei weitere Rotoren 14, 15 vorgesehen. Im Rahmen der Erfindung wäre aber auch eine Ausführung denkbar, die lediglich die beiden Rotoren 14 und 15 vorsieht.

Die Rotoren 12, 14, 15 können das im Haufen auf der Überladestation abgelenkte Material gezielt und dosiert der Bodenfördereinrichtung 6 zuführen, sodass Stauprobleme Bereich der Bodenfördereinrichtung 6 und speziell im Übergangsbereicht zur Hochfördereinrichtung 7 vermieden werden können. Auch kann das Material, welches über die Hochfördereinrichtung 7 gefördert wird, durch die Rotoren dosiert werden. Hierbei ist es denkbar, dass sowohl die Geschwindigkeit, die Zeitdauer und/oder die Drehrichtung einstellbar und veränderbar sind.

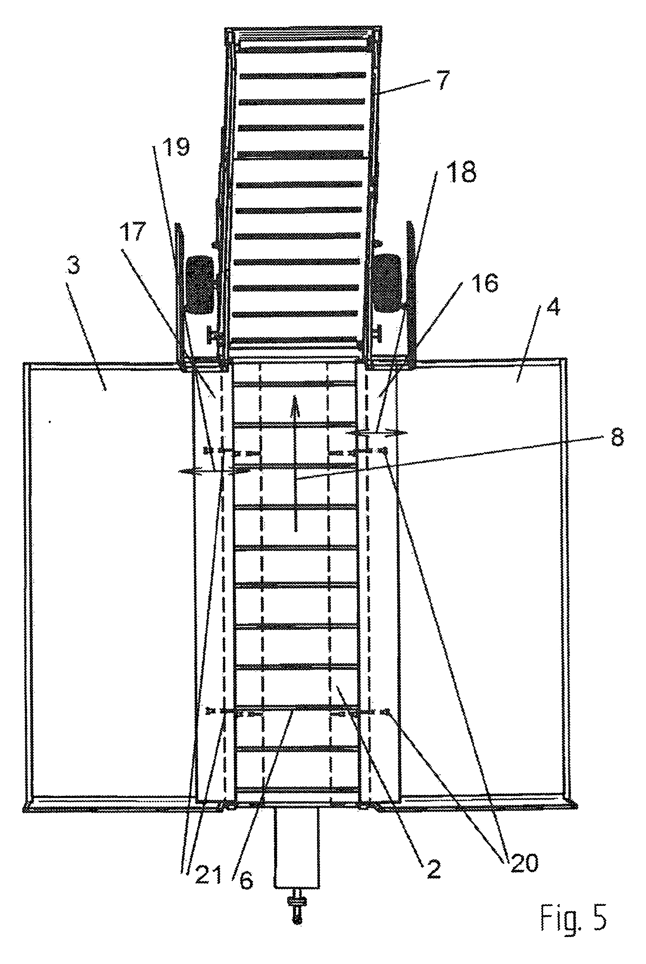

Gemäß einer weiteren, insbesondere aus Fig. 5 ersichtliche Ausgestaltung der mobilen Überladestation sind zu beiden Seiten der Bodenfördereinrichtung 6 Bodenelemente 16, 17 vorgesehen, die quer zur Transportrichtung 8 gemäß den Doppelpfeilen 18, 19 verschiebbar am Aufnahmebehälter 1 gehaltert sind. Die Bodenelemente 16, 17 können somit in die in Fig. 5 gestrichelt dargestellte Position verschoben werden, in der sie die Bodenfördereinrichtung 6 teilweise abdecken und dadurch dessen Förderwirkung begrenzen.

Mit Hilfe dieser Bodenelemente kann somit die Menge des mit der Bodenfördereinrichtung 6 geförderte Materials dosiert werden. Im Zusammenspiel mit den Rotoren lässt sich das Material somit zuverlässig auf die Hochfördereinrichtung 7 dosieren. Etwaiger Stauprobleme, die bisher gerade im Übergangsbereich zwischen Bodenfördereinrichtung und Hochfördereinrichtung aufgetreten sind, können somit zuverlässig vermieden werden.

## Patentansprüche

1. Mobile Überladestation zum Überladen von Schüttgut mit
a. einem Aufnahmebehälter (1) für Schüttgut, der einen Boden, zwei Seitenwände (3, 4) und eine Stirnwand (5) aufweist, wobei der Boden (2) mit einer Bodenfördereinrichtung (6) ausgestattet ist, und die Seitenwände (3, 4) klappbar ausgebildet und zwischen wenigstens einer aufgeklappten ersten Arbeitstellung und einer hochgeklappten zweiten Arbeitstellung verstellbar sind,
b. einer im Bereich der Stirnwand (5) angeordneten Hochfördereinrichtung (7), die sich an die Bodenfördereinrichtung (6) anschließt und das Schüttgut nach oben fördert und
c. einem Fahrgestell (11),
**dadurch gekennzeichnet, dass**
wenigstens ein oberhalb der Bodenfördereinrichtung (6) angeordneter Rotor (12, 13, 15) zur Dosierung des Schüttgutes vorgesehen ist, der eine in Transportrichtung (8) der Bodenfördereinrichtung (6) ausgerichtete Drehachse aufweist und
wenigstens ein Bodenelement (16, 17) vorgesehen ist, das quer zur Transportrichtung (8) der Bodenfördereinrichtung (6) derart verschiebbar ist, dass es von einer Ruhestellung in wenigstens eine Abdeckstellung gebracht werden kann, in der es die Bodenfördereinrichtung teilweise abdeckt.

2. Mobile Überladestation nach Anspruch 1, **dadurch gekennzeichnet, dass** wenigstens ein Rotor (12) in der Längsmittelebene des Aufnahmebehälters (1) angeordnet ist.

3. Mobile Überladestation nach einem oder mehreren der vorhergehenden Ansprüche, **dadurch gekennzeichnet, dass** wenigstens zwei oder drei Rotoren (12, 14, 15) vorgesehen sind, die parallel nebeneinander über der Bodenfördereinrichtung (6) angeordnet sind.

4. Mobile Überladestation nach einem oder mehreren der vorhergehenden Ansprüche, **dadurch gekennzeichnet, dass** der wenigstens eine Rotor (12) einen Antriebsmotor (13) aufweist, der den Rotor in beide Drehrichtungen antreiben kann.

5. Mobile Überladestation nach einem oder mehreren der vorhergehenden Ansprüche, **dadurch gekennzeichnet, dass** der Rotor (12) wenigstens ein, zwei oder drei radial von der Drehachse abstehende und sich über die gesamte Länge der Bodenfördereinrichtung erstreckende Förderelemente (12a, 12b, 12c) aufweist.

6. Mobile Überladestation nach Anspruch 1, **dadurch gekennzeichnet, dass** an beiden Seiten der Bodenfördereinrichtung (6) jeweils ein verschiebbares Bodenelement (16, 17) vorgesehen ist.

7. Mobile Überladestation nach Anspruch 6, **dadurch gekennzeichnet, dass** das wenigstens eine Bodenelement (16, 17) an einem Rahmen des Aufnahmebehälters (1) geführt ist.

8. Mobile Überladestation nach einem oder mehreren der vorhergehenden Ansprüche, **dadurch gekennzeichnet, dass** die Seitenwände (3, 4) um Klappachsen schwenkbar sind, die zu beiden Seiten der Bodenfördereinrichtung (6) angeordnet und parallel zur Transportrichtung (8) der Bodenfördereinrichtung (6) ausgerichtet sind.

9. Mobile Überladestation nach einem oder mehreren der vorhergehenden Ansprüche, **dadurch gekennzeichnet, dass** die Stirnwand (5) durch zwei schwenkbare Wandelemente (5a, 5b) gebildet wird, die sich in einer Transportstellung parallel zur Transportrichtung der Bodenfördereinrichtung (6) und in wenigstens einer ersten Arbeitsstellung im Wesentlichen senkrecht zur Transportrichtung (8) der Bodenfördereinrichtung (6) erstrecken.

10. Mobile Überladestation nach einem oder mehreren der vorhergehenden Ansprüche, **dadurch gekennzeichnet, dass** die Hochfördereinrichtung (7) um eine Schwenkachse schwenkbar am Aufnahmebehälter (1) gelagert ist.

11. Mobile Überladestation nach einem oder mehreren der vorhergehenden Ansprüche, **dadurch gekennzeichnet, dass** die Bodenfördereinrichtung (6) als Kratzboden, Förderband, Pushing Floor oder Schubboden ausgebildet ist.

## Claims

1. A mobile transfer station for transferring bulk material, comprising
a. a receptacle (1) for bulk material, which has a floor, two lateral walls (3, 4) and an end wall (5), wherein the floor (2) is equipped with a floor conveyor (6), and the lateral walls (3, 4) are designed to be foldable and are adjustable between at least one folded-open first working position and a folded-up second working position,
b. a vertical conveyor (7) which is arranged in the region of the end wall (5) and adjoins the floor conveyor (6) and conveys the bulk material upwards, and
c. a chassis (11),
**characterised in that**
at least one rotor (12, 13, 15) arranged above the floor conveyor (6) is provided for metering the bulk material and has an axis of rotation aligned in the transport direction (8) of the floor conveyor (6) and
at least one floor element (16, 17) is provided, which is displaceable transversely to the transport direction (8) of the floor conveyor (6) such that it can be brought from a rest position into a least one covering position in which it partially covers the floor conveyor.

2. A mobile transfer station according to claim 1, **characterised in that** at least one rotor (12) is arranged in the longitudinal central plane of the receptacle (1).

3. A mobile transfer station according to one or more of the preceding claims, **characterised in that** at least two or three rotors (12, 14, 15) are provided, which are arranged parallel side by side above the floor conveyor (6).

4. A mobile transfer station according to one or more the preceding claims, **characterised in that** the at least one rotor (12) has a drive motor (13) which is able to drive the rotor in both directions of rotation.

5. A mobile transfer station according to one or more of the preceding claims, **characterised in that** the rotor (12) has at least one, two or three conveying elements (12a, 12b, 12c) projecting radially from the axis of rotation and extending over the entire length of the floor conveyor.

6. A mobile transfer station according to claim 1, **characterised in that** a displaceable floor element (16, 17) is provided on each side of the floor conveyor (6).

7. A mobile transfer station according to claim 6, **characterised in that** the at least one floor element (16, 17) is guided on a frame of the receptacle (1).

8. A mobile transfer station according to one or more of the preceding claims, **characterised in that** the lateral walls (3, 4) are pivotable about hinge axes, which are arranged on both sides of the floor conveyor (6) and aligned parallel to the transport direction (8) of the floor conveyor (6).

9. A mobile transfer station according to one or more of the preceding claims, **characterised in that** the end wall (5) is formed by two pivotable wall elements (5a, 5b), which in a transport position extend parallel to the transport direction of the floor conveyor (6) and in at least one first working position extend substantially perpendicularly to the transport direction (8) of the floor conveyor (6).

10. A mobile transfer station according to one or more of the preceding claims, **characterised in that** the vertical conveyor (7) is mounted on the receptacle (1) so as to pivot around a pivot axis.

11. A mobile transfer station according to one or more of the preceding claims, **characterised in that** the floor conveyor (6) is in the form of a scraper floor, conveyor belt, pushing floor or sliding floor.

## Revendications

1. Station de transbordement mobile pour matières en vrac, comprenant
a) un récipient collecteur (1), qui est doté d'un fond, de deux parois latérales (3, 4) et d'une paroi frontale (5), sachant que le fond (2) est pourvu d'un dispositif de transport horizontal (6) et que les parois latérales (3, 4) sont de conception escamotable et peuvent être ajustées entre une première position de travail, dans laquelle elles sont dépliées et une deuxième position de travail, dans laquelle elles sont relevées ;
b) un dispositif de transport élévateur (7), qui, disposé dans la région de la paroi frontale (5), se raccorde au dispositif de transport horizontal (6) et transporte les matières en vrac vers le haut, et
c) un châssis (11),
**caractérisée en ce que**,
pour le dosage de la matière en vrac, est prévu au moins un rotor (12, 13, 15), qui, disposé au-dessus du dispositif de transport horizontal (6), est doté d'un axe de rotation orienté dans la direction de transport (8) du dispositif de transport horizontal (6),
et qu'est prévu au moins un élément de fond (16, 17), qui peut être déplacé perpendiculairement à la direction de transport (8) du dispositif de transport horizontal (6), ce qui lui permet de passer d'une position de repos à au moins une position, dans laquelle il couvre partiellement le dispositif de transport horizontal.

2. Station de transbordement mobile selon la revendication 1, **caractérisée en ce qu'**au moins un rotor (12) est disposé dans le plan médian, longitudinal du récipient collecteur (1).

3. Station de transbordement mobile selon l'une ou plusieurs des revendications précédentes **caractérisée en ce que** sont prévus au moins deux ou trois rotors (12, 14, 15), qui sont disposés parallèlement, côte à côte, au-dessus du dispositif de transport horizontal (6).

4. Station de transbordement mobile selon l'une ou plusieurs des revendications précédentes, **caractérisée en ce que** le rotor (12) au moins prévu est doté d'un moteur de commande (13), qui entraîne le rotor dans les deux directions de rotation.

5. Station de transbordement mobile selon l'une ou plusieurs des revendications précédentes, **caractérisée en ce que** le rotor (12) est doté d'au moins un, deux ou trois éléments de transport (12a, 12b, 12c), qui s'étendent sur toute la longueur du dispositif de transport horizontal.

6. Station de transbordement mobile selon la revendication 1, **caractérisée en ce que**, sur chacun des deux côtés du dispositif de transport horizontal (6) est prévu un élément de fond (16, 17).

7. Station de transbordement mobile selon la revendication 6, **caractérisée en ce que** l'élément de fond (16, 17) au moins prévu est guidé sur un cadre du récipient collecteur (1).

8. Station de transbordement mobile selon l'une ou plusieurs des revendications précédentes, **caractérisée en ce que** les parois latérales (3, 4) peuvent pivoter autour d'axes, qui sont agencés des deux côtés du dispositif de transport horizontal et orientés parallèlement à la direction de transport (8) du dispositif de transport horizontal (6).

9. Station de transbordement mobile selon l'une ou plusieurs des revendications précédentes, **caractérisée en ce que** la paroi frontale (5) est composée de deux éléments de paroi pivotants (5a, 5b), qui s'étendent parallèlement à la direction de transport (8) du dispositif de transport horizontal (6), dans une position de transport, et sensiblement perpendiculairement à la direction de transport (8) du dispositif de transport horizontal (6), dans au moins une première position de travail.

10. Station de transbordement mobile selon l'une ou plusieurs des revendications précédentes, **caractérisée en ce que** le dispositif de transport élévateur (7) est monté à pivotement autour d'un axe de pivotement, sur le récipient collecteur (1).

11. Station de transbordement mobile selon l'une ou plusieurs des revendications précédentes, **caractérisée en ce que** le dispositif de transport horizontal (6) est réalisé sous la forme d'un fond égratineur, d'une bande de transport, d'un "pushing floor" ou un fond poussoir.
